# EUROPEAN PATENT APPLICATION

(11) **EP 4 414 751 A1**
(43) Date of publication of application: **14.08.2024**
(21) Application number: 23155968.3
(22) Date of filing: 10.02.2023
(51) Int. Cl.: G01T 1/24

(54) **DIRECT CONVERSION SPECTRAL X-RAY DETECTION**

(71) Applicant: Koninklijke Philips N.V., 5656 AG Eindhoven (NL)
(72) Inventor: WIECZOREK, Herfried Karl, Eindhoven (NL); RUETTEN, Walter, Eindhoven (NL)
(74) Representative: Philips Intellectual Property & Standards

(57) **Abstract**

A method for direct conversion spectral X-ray detection is provided, the method comprising measuring, by employing a first pulse shaper having a first shaping time constant and a second pulse shaper having a second shaping time constant, a first signal generated by X-ray-generated electrons and a second signal generated by X-ray-generated holes, the first shaping time constant being different from the second shaping time constant, and generating a detector output, wherein the detector output comprises a combination of the first signal and the second signal.

## Description

### FIELD OF THE INVENTION

The present invention relates to a method for direct conversion spectral X-ray detection, an X-ray detector, a computer program product and a computer-readable medium.

### BACKGROUND OF THE INVENTION

Direct conversion spectral X-ray detection is used, for example, as it allows for cost-effective and high-resolving power radiation measurement.

However, it is desirable to improve, in such detectors, accuracy, e.g. spectral separation, and possibly allow for thinner detection layers without detriment to the effective detective quantum efficiency (DQE).

### SUMMARY OF THE INVENTION

It is an object of the present invention to provide an improved direct conversion spectral X-ray detection and/or an improved X-ray detector, particularly having improved accuracy of the detector output and/or allowing for thinner detection layers.

The present invention provides a method for direct conversion spectral X-ray detection, an X-ray detector, a computer program product, and a computer-readable medium according to the independent claims. Preferred embodiments are laid down in the dependent claims.

According to the present disclosure, the method for direct conversion spectral X-ray detection comprises:
measuring, by employing a first pulse shaper having a first shaping time constant and a second pulse shaper having a second shaping time constant, a first signal generated by X-ray-generated electrons and a second signal generated by X-ray-generated holes, the first shaping time constant being different from the second shaping time constant, and
generating a detector output, wherein the detector output comprises a combination of the first signal and the second signal.

Conversion of the spectral X-ray detection may be carried out, for example, by means of direct converters for X-ray absorption. X-ray detectors for direct conversion spectral X-ray detection (also referred to in short as direct converters) may, for example, comprise cadmium telluride (CdTe), cadmium zinc telluride (CZT), or perovskite layers, especially organic-inorganic perovskites (e.g. MAPI, methylamine lead iodide) as part of the conversion layer/detection layer. Direct converters may be converters that allow for single photon counting and spectral separation of the X-ray signal.

The shaping time constant of a pulse shaper may, for example, be understood as a parameter describing the cutoff of the pulse shaper, e.g. depending on time constants of cascaded highpass and lowpass filters of the pulse shaper. These time constants may be identical and correspond to the shaping time constant, for example.

The first shaping time constant may be smaller than the second shaping time constant. In that case, the first pulse shaper may also be referred to as fast shaper and the second pulse shaper may also be referred to as slow shaper. This may be the case for conversion materials where the electron signal is the fast signal. Alternatively, the first shaping time constant may be bigger than the second shaping time constant. In this case, accordingly, the first pulse shaper may also be referred to as slow shaper and the second pulse shaper may also be referred to as fast shaper. This may be the case for conversion materials where the hole signal is the fast signal.

Each pulse shaper may receive a mixed signal comprising hole-generated and electron-generated parts as an input signal.

The first pulse shaper, due to its first shaping time constant, will measure (e.g., output) (preferably/mainly, as there may be incomplete separation of electron and hole signal) the electron-generated parts of the mixed signal, i.e., it will measure (output) a signal that may be referred to as (first) signal generated by X-ray-generated electrons or, in short, electron-generated signal.

The second pulse shaper, due to its second shaping time constant, will measure (preferably/mainly) the hole-generated parts of the mixed signal, i.e., it will measure a signal that may be referred to as (second) signal generated by X-ray-generated holes, or, in short, hole-generated signal.

The pulse shaper having the bigger time constant may optionally measure the entire mixed signal, i.e., both, the hole-generated parts and the electron-generated parts of the mixed signal. The pulse shaper having the smaller time constant may measure only/mainly the fast part of the mixed signal, which may be electron-generated or hole-generated, depending on the conversion material of the detector.

Hereinbelow, the term first signal is used interchangeably with the term electron-generated signal and the term second signal is used interchangeably with the term hole-generated signal unless otherwise specified.

Measuring an electron-generated signal or measuring a hole-generated signal by employing a pulse shaper may comprise the pulse shaper receiving a mixed signal as an input signal, the mixed signal comprising electron-generated parts and hole-generated parts, processing the mixed signal so as to select (filter for) electron-generated parts or hole-generated parts respectively, and outputting (preferably/mainly) the selected electron-generated parts as electron-generated signal or hole-generated parts as hole-generated signal, respectively.

The input signal of the pulse shaper may be an amplified and/or integrated signal. That is, a signal generated by the X-ray absorption event may be picked up by an amplifier and/or integrator connected to a contact of the detector, amplified and/or integrated and, after amplifying/integrating, provided to the pulse shaper.

Thus, the method may comprise receiving, by the pulse shaper, an integrated and/or amplified signal. For example, the signal may be received via an integrator as an integrated signal and/or via an amplifier as an amplified signal.

The detector output may comprise data indicative of energy and/or depth-of-interaction.

The detector output comprising a combination of the first signal and the second signal may, for example, entail that the detector output comprises data obtained by calculating a, potentially weighted, sum and/or a ratio of the first signal and the second signal.

The detector output comprising a combination of the first signal and the second signal may, for example, entail that the detector output is obtained by a processing step, which receives the first signal and the second signal as input, processes both signals, and outputs a value that is based on both signals. In other words, the detector output is based on both signals.

As an example, the detector output may comprise a value indicative of energy calculated based on the first signal and the second signal, for example calculated based on a (weighted) sum of the signals. Alternatively or in addition, the detector output may comprise a value indicative of depth-of-interaction, calculated based on the first signal and the second signal.

As will be seen below, both pulse shapers may use the same signal from a charge-sensitive amplifier (CSA) as input or separate CSAs may be provided. As also seen below, the measurement of the electron and/or the hole signal may include the respective signal from nearest neighbors. These aspects may serve to further improve the method.

The claimed method allows for enhanced spectral separation and for thinner detection layers without reducing the DQE. Specifically, the claimed method makes use of a hole signal in addition to an electron signal to achieve this.

A second pulse shaper with a longer time constant than the standard (fast) pulse shaper commonly used for the electron signal may be provided to that end. This allows to take into account the usually lower mobility of the holes.

The hole-generated signal may be added to the electron-generated signal that is seen at approximately the same time and nearly at the same place.
According to the present disclosure, the electron-generated signal and hole-generated signal may be generated by a common absorption event, which generates a number of low-energy electron-hole pairs.

The addition of the hole-generated signal provides a more reliable measurement of X-ray energies for all quanta, particularly quanta absorbed near the anode pixels or in the bulk of the detector.

Thus, since the effective DQE for high-energy quanta is improved, a thinner detection layer can be employed without significant reduction of DQE. This may also enable to add no nearest-neighbor signals for electrons since the drift path is shorter in a thinner detector.

According to the present disclosure, the first pulse shaper and the second pulse shaper may receive the same input signals, particularly input signals from a pixelated readout contact of an X-ray detector, and output the first signal and the second signal, respectively.

For example, the first and second pulse shaper may be connected to one of the pixels of the readout contact, particularly via a common amplifier or integrator.

As an example, the first pulse shaper and the second pulse shaper may both be connected to a common amplifier or integrator and receive the output signal of the common amplifier or integrator. The common amplifier or integrator may, for example, be connected to a pixel of the pixelated readout contact and amplify or integrate the signal prior to providing it to the first and second pulse shaper. Each pulse shaper outputs a signal. These signals may be different. That is, the first signal may differ from the second signal.

An advantage of having a common input for the first and second pulse shaper is, for example, that the construction is relatively simple. A common electrode can be used for applying bias and the pixelated electrode can serve as a readout electrode. Such a configuration may be without signal isolator (see details below).

Alternatively, the first pulse shaper may receive a first input signal from a first pixelated readout contact of an X-ray detector and output the first signal, and the second pulse shaper may receive a second input signal from a second pixelated readout contact of the X-ray detector and output the second signal.

For example, the first pulse shaper may be connected to one of the pixels of one of the contacts, e.g. the bottom contact, particularly via a first amplifier or integrator. The second pulse shaper may be connected to one of the pixels of the opposite contact, e.g., the top contact, particularly via a second amplifier or integrator (different from the first amplifier or integrator). The pixel to which the second pulse shaper is connected may, in particular, be oppositely arranged to the pixel to which the second pulse shaper is connected.

Each pulse shaper outputs a signal. These signals may be different. That is, the first signal may differ from the second signal.

Resolution of such a configuration may be higher, particularly when using pixelated contacts on both sides.

According to the present disclosure, the input signal from the pixelated readout contact, the input signal from the first pixelated readout contact, and/or the input signal from the second pixelated readout contact may be an output signal of a readout amplifier connected between the respective pixelated readout contact and its associated pulse shaper. Each of the amplifiers may, for example, be a CSA.

As an example, the input signal from the (first) pixelated readout contact may be an output signal of a first readout amplifier connected between the (first) pixelated readout contact and the first pulse shaper. The first pulse shaper may thus be seen as the (first) pixelated readout contact's associated pulse shaper. Alternatively or in addition, the input signal from the second pixelated readout contact may be an output signal of a second readout amplifier connected between the second pixelated readout contact and the second pulse shaper. The second pulse shaper may thus be seen as the second readout contact's associated pulse shaper.

Thus, as mentioned above, the first input signal may be received by the first pulse shaper via the first readout amplifier. The second input signal may be received by the second pulse shaper via the second readout amplifier.

In particular, a pixel of the respective pixelated readout contact may be connected to the respective pulse shaper via an amplifier. Optionally, each pixel may be connected only to one amplifier.

The configuration with the pixelated readout contacts and the amplifiers allows for a precise and high-resolution detection.

According to the present disclosure, the first time constant and the second time constant may be selected based on at least one of: a material property of the converter material, an electron mobility, a hole mobility, a distance between a/the first contact and a/the second contact of the X-ray detector, a characteristic time constant of the electron and hole signals.

For example, the first time constant, which is the time constant of the first (fast) pulse shaper, is selected such that, for a specific converter material and/or geometry of the X-ray detector, e.g. distance between the contacts of the X-ray detector (i.e., thickness of the converter material), the electron-generated signal is essentially fully captured. In general, time constants vary depending on the conversion materials, and may have values between 1 µs and 10 ns, for example. For CdZnTe, a time constant in the order of 10 ns may, for example, be expected.

For example, the second time constant, which is the time constant of the second (slow) pulse shaper, is selected such that, for a specific converter material and/or geometry of the X-ray detector, e.g. distance between the contacts of the X-ray detector (i.e., thickness of the converter material), the hole-generated signal is essentially fully captured. In general, time constants vary depending on the conversion materials, and may have values between 10 µs and 30 ns, particularly between 10 µs and 100 ns, for example. For CdZnTe, a time constant in the order of 100 ns may, for example, be expected. Thus, for CdZnTe, the time constant for holes may be a factor 10 longer than that for electrons. This factor is generally based on the electron and hole mobilities for the conversion material.

The electron-generated or hole-generated signal being essentially fully captured may refer to the signal of one absorption event being essentially fully captured. "Essentially" is used herein to allow for losses that may occur due to recombination or spread of the charge cloud, for example.

According to the present disclosure, for each pixel of the X-ray detector, generating the detector output for the pixel may comprise determining a, optionally weighted, sum of the first signal of the pixel and the first signals of predetermined neighboring pixels, and/or determining a, optionally weighted, sum of the second signal of the pixel and the second signals of predetermined neighboring pixels.

As an example, the predetermined neighboring pixels may comprise nearest neighbor pixels of a first tier or include the pixels of the first tier and optionally one or more additional tiers around the pixel. The signals may be received from respective pulse shapers receiving input signals from the predetermined neighboring pixels, e.g., may be the output signals of said respective pulse shapers.

In other words, the electron-generated signals and/or the hole-generated signals input into an energy and/or a Depth-of-Interaction determination may comprise the respective signal from (e.g. nearest) neighbors (i.e., neighboring pixels). The energy and/or a Depth-of-Interaction determination for a pixel may be based on said electron-generated signals and/or the hole-generated signals from the pixel's neighbors as well as the electron-generated signal and hole-generated signal from the pixel itself. This may serve to further improve the method in terms of accuracy.

The number of predetermined pixels for the neighboring hole-generated signals may be larger than the number of predetermined neighboring pixels for the electron-generated signals. For example, the predetermined pixels for the neighboring hole-generated signals may include nearest and second nearest neighbors and the predetermined neighboring pixels for the electron-generated signals may only include nearest neighbors. This may address issues resulting from a slight shift of pixels, e.g., when the hole-generated signal is distributed over a larger area than the electron-generated signal due to long drift length and low hole mobility.

According to the present disclosure, generating the detector output may comprise performing an energy determination, in particular, based on a weighted sum of the first signal and the second signal.

Alternatively or in addition, generating the detector output may comprise a depth-of interaction determination, in particular, based on relative signal magnitudes of the first signal and the second signal.

That is, the hole and electron currents may be added up, potentially with weighting factors applied, to carry out the energy determination. This could simply be seen as an increase in signal strength and the weighting may allow for correcting for different characteristics of the electron and hole signal, e.g. due to mobility, drift length, spread, or the like.

The magnitude of the hole current and the signal current depends on the distance travelled by the electron and hole of an electron-hole pair generated by an absorption event through the converter material to the respective contact. Thus, based on the relative magnitude of electron-generated signal and hole-generated signal, a depth-of-interaction may be determined.

Each of the determinations may be calibrated by irradiating the detector with predetermined radiation quanta.

According to the present disclosure, the energy determination and/or the depth-of-interaction determination may be performed in the analog domain, particularly in the pixel electronics. Alternatively, the energy determination and/or the depth-of-interaction determination may be performed in the digital domain after separately digitizing the first signal and the second signal.

The analog domain may be advantageous particularly when the electron-generated signal and hole-generated signal are read out at the same contact. When they are read out at different contacts (e.g. top and bottom electrode) it may be advantageous to digitize the signals separately, as this may be less demanding in terms of signal isolation and transfer of the signals to the determination stages.

According to the present disclosure, generating the detector output may comprise carrying out the signal correction and/or detector output correction using reference data.

For example, as described above, the detector may be irradiated with reference quanta of known energy. The reference data may comprise signals and/or detector output obtained in response to this irradiation.

Corrections could be done on the individual signals or after combining the signals. For example, the ratio of signals could be obtained, and the potentially non-linear result could be post-corrected to obtain true depth-of-interaction. Alternatively, a two-dimensional look-up table could be used, where the first axis gets the first signal, the second axis gets the second signal, and from the crossing point, a tabulated depth-of-interaction is obtained.

According to the present disclosure, the reference data may comprise a ratio between a first test signal generated by X-ray-generated electrons and a second test signal generated by X-ray-generated holes, the first and second test signals measured by the X-ray detector for reference gamma quanta having known energies, wherein carrying out signal and/or detector output correction may comprise using the ratio for determining the depth-of-interaction.

Due to the correction according to the present disclosure, improved detector output can be obtained.

The invention also provides a direct conversion spectral X-ray detector. The detector is configured to measure, by employing a first pulse shaper having first shaping time constant and a second pulse shaper having a second shaping time constant, a first signal generated by X-ray-generated electrons and a second signal generated by X-ray-generated holes, the first shaping time constant being different from the second shaping time constant, and generate a detector output, wherein the detector output comprises a combination of the first signal and the second signal.

In particular, the X-ray detector may be configured to carry out the method of the present disclosure, particularly as outlined above.

According to the present disclosure, the detector may comprise a first contact for obtaining an input signal, and a second contact, wherein the first contact is a pixelated readout contact and wherein the second contact is a common contact configured for applying a bias voltage. The first pulse shaper and the second pulse shaper may be configured to receive the same input signal from the pixelated readout contact and to output the first signal and the second signal, respectively.

According to the present disclosure, the detector may comprise a first contact and a second contact, wherein the first contact is a first pixelated readout contact for obtaining a first input signal for the first pulse shaper and the second contact is a second pixelated readout contact for obtaining a second input signal for the second pulse shaper. One of the first contact and the second contact may be configured for applying, in particular supplied through an amplifier or an integrator connected to one of the pixels, a bias voltage. The first pulse shaper may be configured to receive the first input signal from the first pixelated readout contact and to output the first signal, and the second pulse shaper may be configured to receive the second input signal from the second pixelated readout contact and to output the second signal.

The X-ray detector may comprise, between the first contact and the second contact, a converter material wherein electron-hole pairs are generated when a gamma quantum is absorbed, such that an electron-generated signal and a hole-generated signal is observable.

According to the present disclosure, the X-ray detector may comprise a readout amplifier connected between the respective readout contact and its associated pulse shaper, wherein the input signal, the first input signal, and/or the second input signal may be received by the respective pulse shaper from the readout amplifier.

According to the present disclosure, the X-ray detector may further comprise a signal isolator, also referred to as a level shifter, configured to translate the first output signal to a range compatible with the second output signal or to translate the second output signal to a range compatible with the first output signal.

Translating the first output signal to a range compatible with the second output signal or translating the second output signal to a range compatible with the first output signal is also referred to, collectively, as bringing the first output signal and the second output signal into a compatible range.

The first output signal and second output signal being in a compatible range may refer to the signals being brought into a range that allows further processing, e.g., to carry out energy determination and/or depth-of-interaction determination.

In this context, the term "range" refers to signal range. As an example, the first pulse shaper may be connected to a different contact than the second pulse shaper, e.g., the first and second pulse shapers may receive signals from different contacts (e.g., top contact and bottom contact), and only one of the pulse shapers may be configured to receive signals from the contact that is also configured for applying the bias voltage. In such a scenario, a signal isolator may be provided, e.g., to bring the first output signal and the second output signal into a compatible range.

According to the present disclosure, the pitch of pixels of the first pixelated readout contact may be different from the pitch of pixels of the second pixelated readout contact, and/or the number of pixels of the first pixelated readout contact may be different from the number of pixels of the second pixelated readout contact. This may allow for reduced fabrication and signal processing requirements. For example, this may decrease the number of readout amplifiers/integrators and make the addressing architecture less complicated. In particular, the number of pixels of the second pixelated readout contact may be smaller than the number of pixels of the first pixelated readout contact. Such a lower spatial resolution, e.g., of the top electrode, may be in line with a possibly wider spread of the hole signal and the larger neighboring area needed for hole collection.

Alternatively, according to the present disclosure, the pitch and number of pixels may be the same for the first pixelated readout contact and the second pixelated readout contact. This may allow for particularly high precision.

The invention also provides a computer program product comprising instructions which, when carried out by a computer, cause the computer to carry out the method of the present disclosure, particularly as outlined above.

The invention also provides a (non-transient) computer readable medium comprising instructions which, when carried out by a computer, cause the computer to carry out the method of the present disclosure, particularly as outlined above.

Any features, effects, and/or advantages described above for the method similarly apply for the detector as well, and any feature, effects and/or advantages described above for the detector similarly apply for the method.

Further features, examples, and advantages will become apparent from the detailed description making reference to the accompanying drawings.

### BRIEF DESCRIPTION OF THE DRAWINGS

Fig. 1 is a flowchart schematically illustrating a method according to the present disclosure;
Fig. 2 is a schematic illustration of an X-ray detector according to the present disclosure;
Fig. 3 is a schematic illustration of another X-ray detector according to the present disclosure;
Fig. 4 is a schematic illustration of a current signal from the conversion material of an X-Ray detector according to the present disclosure;
Fig. 5 is a schematic illustration of an integrated charge of current signals or electron-hole pairs for an X-Ray detector according to the present disclosure;
Fig. 6 is a schematic illustration of an integrated signal output from the respective shaper according to the present disclosure;
Fig. 7 is a schematic illustration of another integrated signal output from the respective shaper according to the present disclosure;

### DETAILED DESCRIPTION OF EMBODIMENTS

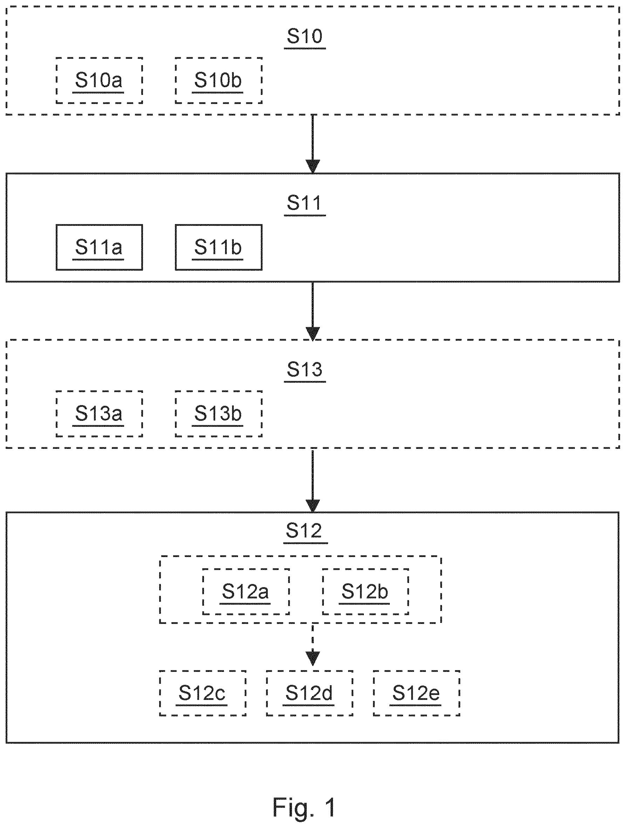

Fig. 1 is a flowchart schematically illustrating a method according to the present disclosure.

The method comprises step S10 of receiving input signals, particularly, step S10a of receiving a first input signal and step S10b of receiving a second input signal.

The method further comprises step S11 of measuring a first signal generated by X-ray-generated electrons (step 11a) and a second signal generated by X-ray-generated holes (step 11b).

The method further comprises the step S12 of generating a detector output, wherein the detector output comprises a combination of the first signal and the second signal.

The method may comprise the optional step S 12a of determining a sum of the first signal of the pixel and the first signals of predetermined neighboring pixels.

The method may comprise the optional step S12b of determining a sum of the second signal of the pixel and the second signals of predetermined neighboring pixels.

The method may comprise the optional step S12c of performing an energy determination. The detector output may comprise or be based on the determined energy.

The method may comprise the optional step S12d of performing a depth-of interaction determination. The detector output may comprise or be based on the determined depth-of-interaction.

The method may comprise the optional step S12e of carrying out a signal correction and/or detector output correction using reference data. As an example, a point of correction may be where the two signals come together. As an example, for depth-of-interaction (DOI) it is possible to first determine a ratio between fast and slow signals and then post-correct the result to obtain a true depth-of-interaction. Another option is to use a 2-dimensional lookup table, where the first axis is addressed via the first signal, and the second axis is addresses via the second signal. At the crossing point, the correct DOI may be read from the table.

The method may comprise step S13 of outputting the first signal (S13a) and the second signal (S13b). This step is performed by the respective pulse shaper prior to step S12. The output signal may be output to the generation/determination steps S12, S12a to S12d.

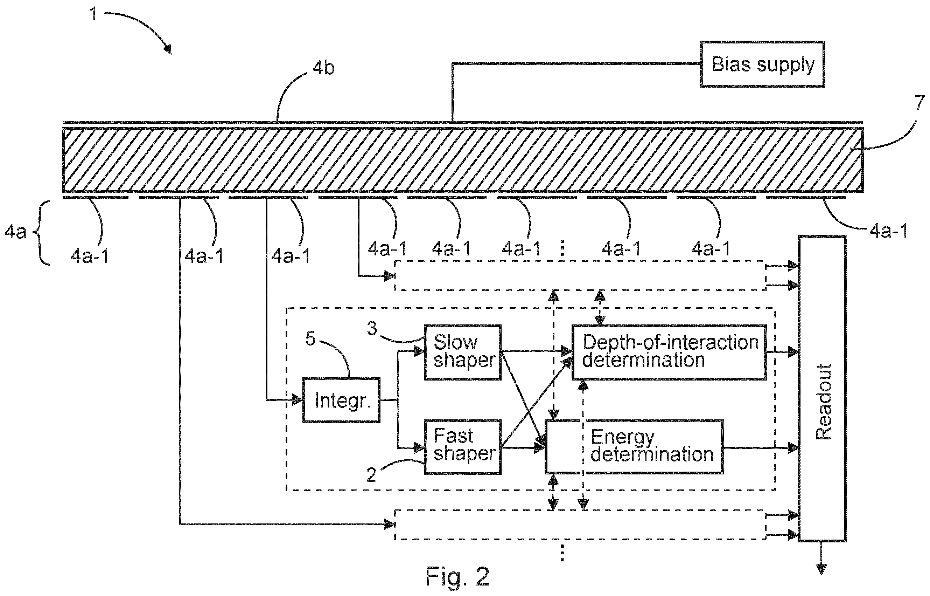

Fig. 2 is a schematic illustration of direct conversion spectral X-ray detector 1 according to the present disclosure. The X-ray detector may be configured to carry out a method according to the present disclosure, particularly the method described in the context of Fig. 1.

The detector comprises a first pulse shaper 2, a second pulse shaper 3, a first contact 4a, which in this example is a first pixelated readout contact having pixels 4a-1, a second contact 4b, which in this example is a common contact, and an amplifier, e.g. a CSA, or integrator 5.

In this example, fast and slow shaper channels receive signals from the same integrator/CSA 5. The depth-of-interaction determination and energy determination schematically shown in the Figure each receive both, fast and slow shaper signals. Energy determination and/or depth-of-interaction determination can optionally take signals from neighbour pixels into account, as explained in the context of Fig. 1, for example.

A bias supply for supplying bias to the common contact 4b is also shown. Moreover, a readout for reading out the output of the detector is also shown.

It is indicated, by way of the dashed rectangles, that there are multiple sets, each including a first and second pulse shaper, and an integrator/amplifier and a respective energy and depth-of-interaction determination. For example, one set may be provided for each of the pixels 4a-1. Dashed arrows between the dashed rectangles, particularly from the energy determination and/or depth-of-interaction determination to the rectangles of the neighboring sets, implies that signals from neighboring pixels may be taken into account for the energy determination and/or depth-of-interaction determination, e.g., by summing the respective signals. This is optional, as discussed above. That is, taking into account signals from neighboring pixels may be performed for both, only one of, or none of energy determination and depth-of-interaction determination.

Reference sign 7 denotes the conversion layer of the X-ray detector, which is arranged between the first and second contact.

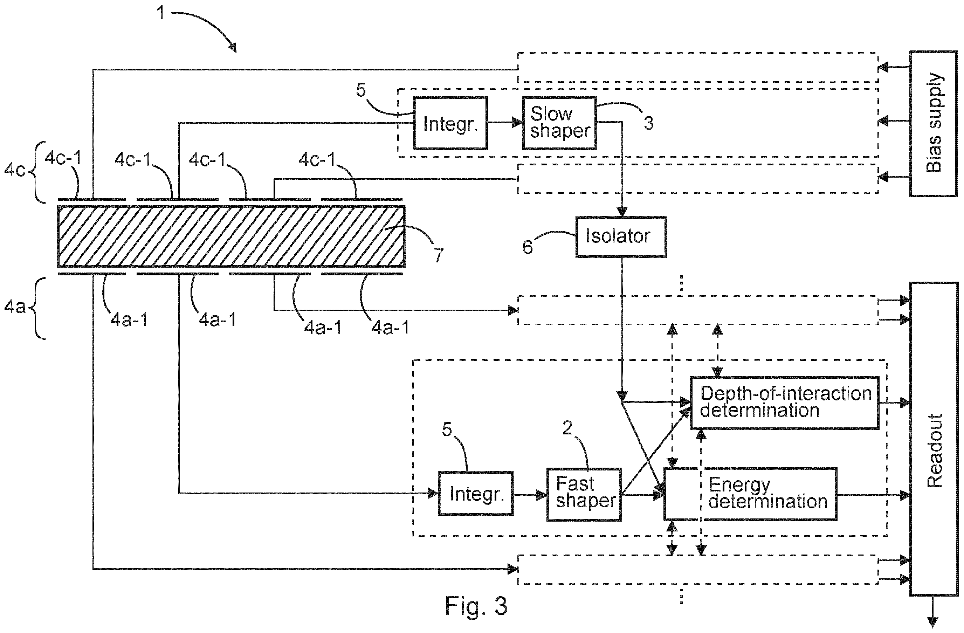

Fig. 3 is a schematic illustration of another direct conversion spectral X-ray detector 1 according to the present disclosure. The X-ray detector may be configured to carry out a method according to the present disclosure, particularly the method described in the context of Fig. 1.

The X-ray detector may be configured as described above in the context of Fig. 2, except that instead of the second contact being a common contact, the second contact 4c in this example is a pixelated readout contact having pixels 4c-1.

It can be seen that two amplifiers or integrators 5 are provided, one for each of the shapers.

Moreover, a signal isolator 6 is provided in this example.

In this example, a pixelated top electrode is used as second contact. A bias supply for supplying bias to the second contact 4c is also shown. Bias supply, in this case, is carried out through the integrators/CSAs connected to the second contact, i.e., in this case, on the top side.
Signals may be read from each of the pixels of the second contact 4c via a respective integrator/CSA and slow shaper.

Both slow and fast shaper signals are fed into the Depth-of-Interaction determination and energy determination. In this example, an isolator is provided for feeding slow and fast shaper signals into the Depth-of-Interaction and energy determination. The bias voltage, in this example applied at the second contact via the integrators/CSAs, can be quite high, e.g., up to several 100 V. In such a case, an isolator stage may be advantageous.

In the present disclosure, particularly the method and detectors described in the context of Figures 1 to 3, the X-ray detector may comprise a direct converter material with a pixelated bottom contact and a common or pixelated top contact.

The pixel array, e.g. at the bottom, may be bump-bonded or otherwise connected to a readout chip below the detection layer.

The top contact may have a constant bias applied.

This may cause the X-ray generated electrons, which are majority carriers with high mobility in the case of CZT, to drift downwards towards the bottom pixel electrodes. X-ray generated holes, on the other hand, drift and diffuse to the top contact.

It is noted that this notation with electrons as majority carriers is used in the present disclosure for the sake of simplicity. This may not be the case for all materials, e.g., perovskite detectors. In such cases, polarities may have to be changed. This is considered to be entailed in the wording of the present disclosure.

In such an arrangement, the signal current caused by the fast electron drift is measured at the single bottom pixel electrodes.

The signal rise at the readout amplifier may be even faster due to the small-pixel effect. That is, the weighting field is strong near the pixel electrodes so that most of the electron drift signal is only measured during the short time when the electrons approach the pixel electrode.

This may be the case when the detection layer is thick enough to absorb most (such as around 98%) of the X-ray quanta, meaning that the majority of X-ray quanta is absorbed just below the common top electrode.

Potential challenges and their solutions according to the present disclosure are presented below.

When X-ray quanta are absorbed on the cathode side (e.g., top side), the long drift path results in an increased size of the electron cloud by diffusion and electrostatic interaction. This may cause charge sharing on the pixels. The effect may be mitigated by adding the nearest-neighbor signals to the primary signal (the strongest signal measured on the pixels).

When X-ray quanta are absorbed on the anode side (e.g., bottom side), near the pixelated electrodes, the drift path for electrons and the resulting signal are small. This is usually the case for part of the high energy quanta, not necessarily for low energy quanta, which are generally rather absorbed near the cathode. If the slow (but large) signal of the X-ray generated holes is neglected, the signal measured for these quanta may be too small and noisy, which lowers the effective DQE for high-energy quanta and distorts the spectrum in case of spectrally resolving detectors. By accounting for the signal of the X-ray generated holes, the DQE and spectral resolution of the detector may be improved.

The same may hold when electron-hole pairs are generated in the bulk of the detection layer. The addition of the nearest-neighbor signal may be employed to further address this issue.

In the methods and detector of the present disclosure, due to a possibly wide distribution of the hole signal in time, in some cases only part of the hole signal may be effectively measured. To counteract this effect and further improve the method, different optional measures may be taken.

As an example, the electron-generated and hole-generated part of the signal may be calibrated using gamma quanta of known discrete energies. The ratios of the electron-generated and hole-generated parts of the signal may be used to determine a depth-of-interaction of all events. Based on this set of measurements, corrections may be applied, particularly for the hole-generated signal and/or the electron-generated signal, e.g., so as to mitigate effects of charge sharing, recombination, and insufficient integration. Artificial intelligence methods, such as machine learning, may be employed to cope with the large number of statistical data that may have to be evaluated for the corrections.

Other aspects of the present disclosure are provided below.
The method and detector of the present disclosure may use a pixelated top electrode (cathode) with additional pixel measurements to get a spatially better resolved signal, e.g., as shown in Fig. 3.

Instead of a pixel array comparable in pitch and number of pixels to the bottom electrode (e.g. Fig. 3), the top electrode may be structured in a different way, e.g. using larger pixels and/or combining pixels in such a manner that the resulting (combined) pixel forms a line, e.g., forms at least part of a row or part of a column, particularly an entire row or an entire column, and/or using a configuration where some or all pixels of a row are connected and read-out collectively and/or using a configuration where some or all pixels of a column are connected and read-out collectively. This may decrease the number of readout amplifiers/integrators and make the addressing architecture less complicated. Such a lower spatial resolution of the top electrode may be in line with a possibly wider spread of the hole signal and the larger neighboring area needed for hole collection.

As briefly described above, Depth-of-Interaction determination can be based on the relative signal magnitudes of electron and hole signal (fast and slow shaper channels).
Energy determination can be based on the (weighted) sum of electron and hole signals (fast and slow shaper channels).

Depth-of-Interaction and/or energy determination can be performed in the analog domain, particularly in the pixel electronics.

Depth-of-Interaction and/or energy determination can be performed in the digital domain. To that end, both fast and slow shaper signals may be digitized, and the determination steps may be performed by a digital hardware, such as a programmable digital hardware (FPGA), or a computer program.

When both contacts, i.e., both sides of the conversion layer, are pixelated readout contacts (e.g. as shown in Fig. 3), the bias voltage may be supplied through the integrators/CSAs of one contact/side (e.g. the top contact/side), referred to as the bias supply side. An isolator may be provided for passing a shaper output signal from the bias supply contact/side to determination blocks on the other side, e.g., the determination blocks for Depth-of-Interaction and/or energy determination, as mentioned above.

With both contacts/sides pixelated, it is an option to transfer the shaper signals of each shaper into the digital domain independently, and then perform a readout of top and bottom side before feeding those signals into the determination blocks for Depth-of-Interaction and/or energy determination. In that case, a single or a small number of, e.g. high data rate, isolators can be sufficient to transfer all data from the bias supply side to the determination blocks.

As mentioned above, the Depth-of-Interaction and/or energy determination may optionally take signals from neighboring pixels into account.

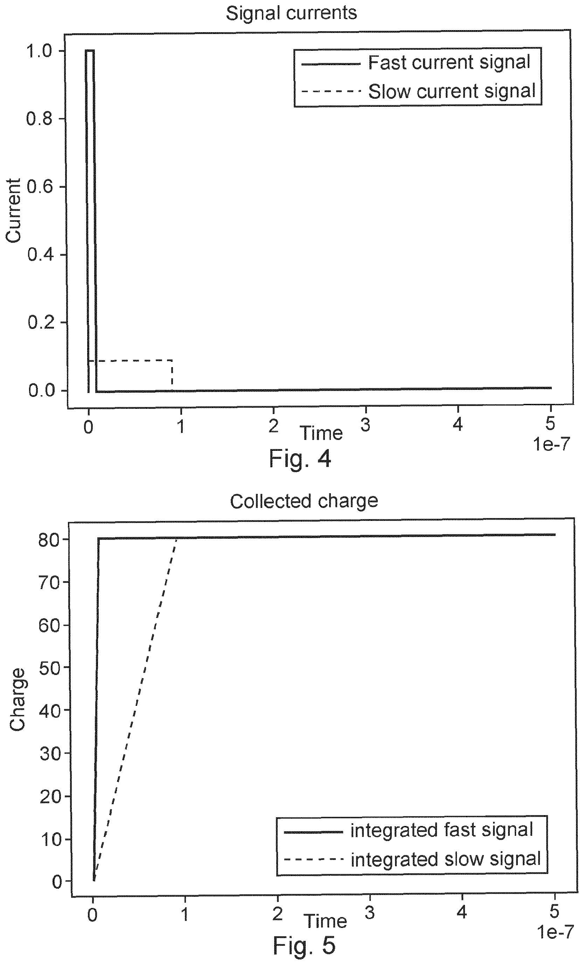

Fig. 4 is a schematic illustration of an exemplary current signal from the conversion material of an X-Ray detector according to the present disclosure. In this example, a signal for a material where the mobility of the electrons is higher than that of the holes is shown. Therefore, a higher current for a shorter time is obtained for the electrons (solid curve). For the holes, a smaller current is obtained for a longer time (dashed curve).

Fig. 5 is a schematic illustration of an exemplary integrated charge of current signals or electron-hole pairs for an X-Ray detector according to the present disclosure.

That is, the integral charge from two current signals, i.e., electron current and hole current, is shown. Electrons and holes are created in pairs so that at the end of the integration there should be the same charge in both signals. It is noted that this is an idealized curve. The effect of recombination during the drift of electrons and holes to the electrode, due to which charge is "lost" such that the integral electron and hole signals are not necessarily equal, has been neglected in the idealized curve.

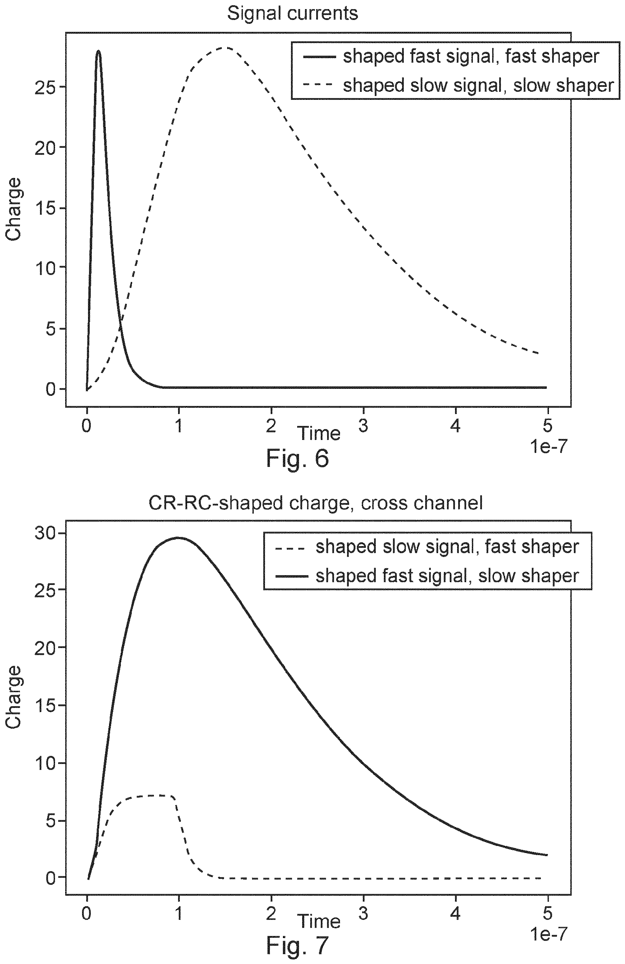

Fig. 6 is a schematic illustration of an integrated signal output from (after) the respective shaper according to an example of the present disclosure. Shown here is a "fast signal to fast shaper" and "slow signal to slow shaper" scenario. It can be seen that the curves reach the same maximum value (assuming that no charge is lost, see above).

Fig. 7 is a schematic illustration of another integrated signal output from (after) the respective shaper according to an example of the present disclosure. Shown here is a "fast signal to slow shaper" and "slow signal to fast shaper" scenario. The output of the slow shaper shows a large output signal even with the fast signal. The output of the fast shaper shows a much smaller response with the slow signal. Thus, a separation of the fast and slow signals becomes possible and the further processing steps (energy, depth-of-interaction) can take place.

As mentioned already above, in the present disclosure, in several instances a notation with electrons as majority carriers is used for the sake of simplicity. This may not be the case for all materials, e.g., perovskite detectors. In such cases, polarities may have to be changed. This is considered to be entailed in the wording of the present disclosure.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention may be implemented by means of hardware comprising several distinct elements, and/or by means of a suitably programmed processor. In the device claim enumerating several means, several of these means may be embodied by one and the same item of hardware. Measures recited in mutually different dependent claims may advantageously be used in combination.

### LIST OF REFERENCE SIGNS:

- S10: receive input signals
- S10a: receive a first input signal
- S10b: receive a second input signal
- S11: measure a first signal generated by X-ray-generated electrons and a second signal generated by X-ray-generated holes
- S11a: measure the first signal generated by X-ray-generated electrons
- S11b: measure the second signal generated by X-ray-generated holes
- S12: generate a detector output, wherein the detector output comprises a combination of the first signal and the second signal
- S12a: determine a sum of the first signal of the pixel and the first signals of predetermined neighboring pixels
- S12b: determining a sum of the second signal of the pixel and the second signals of predetermined neighboring pixels
- S12c: perform an energy determination
- S 12d: perform a depth-of interaction determination
- S12e: carry out a signal correction using reference data
- S13: output the first signal and the second signal
- S13a: output the first signal
- S13b: output the second signal
- 1: direct conversion spectral X-ray detector
- 2: first pulse shaper
- 3: second pulse shaper
- 4a: first contact, first pixelated readout contact
- 4a-1: pixels of first pixelated readout contact
- 4b: second contact, common contact
- 4c: second contact, second pixelated readout contact
- 4c-1: pixels of second pixelated readout contact
- 5: amplifier or integrator
- 6: signal isolator
- 7: conversion layer

## Claims

1. A method for direct conversion spectral X-ray detection, the method comprising:
measuring (S11), by employing a first pulse shaper (2) having a first shaping time constant, and a second pulse shaper (3) having a second shaping time constant, a first signal generated by X-ray-generated electrons and a second signal generated by X-ray-generated holes, the first shaping time constant being different from the second shaping time constant, and
generating (S12) a detector output, wherein the detector output comprises a combination of the first signal and the second signal.

2. The method of claim 1,
wherein the first pulse shaper and the second pulse shaper receive (S10) the same input signals, particularly input signals from a pixelated readout contact of an X-ray detector, and output (S13) the first signal and the second signal, respectively, or
wherein the first pulse shaper receives (S10a) a first input signal from a first pixelated readout contact of an X-ray detector and outputs (S13a) the first signal, and wherein the second pulse shaper receives (S10b) a second input signal from a second pixelated readout contact of the X-ray detector and outputs (S 13b) the second signal,
in particular, wherein the input signal from the pixelated readout contact, the input signal from the first pixelated readout contact, and/or the input signal from the second pixelated readout contact is an output signal of a readout amplifier connected between the respective pixelated readout contact and its associated pulse shaper.

3. The method of any of the preceding claims, wherein the first time constant and the second time constant are selected based on at least one of: a material property of the converter material, an electron mobility, a hole mobility, a distance between a/the first contact and a/the second contact of the X-ray detector, a characteristic time constant of the electron and hole signals.

4. The method of any of the preceding claims, wherein, for each pixel of the X-ray detector, generating the detector output for the pixel comprises determining (S 12a) a, optionally weighted, sum of the first signal of the pixel and the first signals of predetermined neighboring pixels, and/or determining (S12b) a, optionally weighted, sum of the second signal of the pixel and the second signals of predetermined neighboring pixels.

5. The method of any of the preceding claims,
wherein generating the detector output comprises performing an energy determination (S12c), in particular, based on a weighted sum of the first signal and the second signal, and/or
wherein generating the detector output comprises a depth-of interaction determination (S12d), in particular, based on relative signal magnitudes of the first signal and the second signal.

6. The method of claim 5,
wherein the energy determination and/or the depth-of-interaction determination are performed in the analog domain, particularly in the pixel electronics, or
wherein the energy determination and/or the depth-of-interaction determination are performed in the digital domain after separately digitizing the first signal and the second signal.

7. The method of any of the preceding claims, wherein generating the detector output comprises carrying out a signal correction and/or detector output correction (S12e) using reference data.

8. The method of claim 7,
wherein the reference data comprises a ratio between a first test signal generated by X-ray-generated electrons and a second test signal generated by X-ray-generated holes, the first and second test signals measured by the X-ray detector for reference gamma quanta having known energies, and
wherein carrying out signal correction and/or detector output correction comprises using the ratio for determining the depth-of-interaction.

9. A direct conversion spectral X-ray detector (1) configured to carry out the method of any of the preceding claims.

10. The X-ray detector of claim 9,
wherein the detector comprises a first contact (4a) for obtaining an input signal, and a second contact (4b, 4c),
wherein the first contact is a pixelated readout contact,
wherein the second contact is a common contact (4b) configured for applying a bias voltage, and
wherein the first pulse shaper and the second pulse shaper are configured to receive the same input signal from the pixelated readout contact and to output the first signal and the second signal, respectively.

11. The X-ray detector of claim 9,
wherein the detector comprises a first contact (4a) and a second contact (4b, 4c),
wherein the first contact is a first pixelated readout contact for obtaining a first input signal for the first pulse shaper and the second contact is a second pixelated readout contact (4c) for obtaining a second input signal for the second pulse shaper,
wherein one of the first contact and the second contact is configured for applying, in particular supplied through an amplifier (5) or an integrator connected to one of the pixels, a bias voltage,
wherein the first pulse shaper is configured to receive the first input signal from the first pixelated readout contact and to output the first signal, and
wherein the second pulse shaper is configured to receive the second input signal from the second pixelated readout contact and to output the second signal.

12. The X-ray detector of claim 11, further comprising a signal isolator (6) configured to translate the first output signal to a range compatible with the second output signal or to translate the second output signal to a range compatible with the first output signal.

13. The X-ray detector of claims 10 to 12,
wherein the pitch of pixels (4a-1) of the first pixelated readout contact is different from the pitch of pixels (4c-1) of the second pixelated readout contact, and/or wherein the number of pixels of the first pixelated readout contact is different from the number of pixels of the second pixelated readout contact, or
wherein the pitch and number of pixels is the same for the first pixelated readout contact and the second pixelated readout contact.

14. A computer program product comprising instructions which, when carried out by a computer, cause the computer to carry out the method of claims 1 to 8.

15. A computer readable medium comprising instructions which, when carried out by a computer, cause the computer to carry out the method of claims 1 to 8.
